# FASCICULE DE BREVET EUROPEEN

(11) **EP 3 060 395 B1**
(45) Date de publication et mention de la délivrance du brevet: **03.06.2020**
(21) Numéro de dépôt: 14796820.0
(22) Date de dépôt: 15.10.2014
(51) Int. Cl.: B32B 17/10

(54) **VITRAGE POUR SYSTÈME DE VISUALISATION**
VERGLASUNG FÜR ANZEIGESYSTEM
GLAZING FOR VISUALISATION SYSTEM

(30) Priorité: 22.10.2013 FR 1360289
(43) Date de publication de la demande: 31.08.2016
(73) Titulaire: Sekisui Chemical Co., Ltd., Osaka-shi, Osaka 530-8565 (JP)
(72) Inventeur: CLABAU, Frédéric, F-49100 Angers (FR); LABROT, Michael, 52072 Aachen (DE); LEMAIRE, Marc, F-69100 Villeurbanne (FR); DUCLOS, Marie-Christine, F-69100 Villeurbanne (FR); METAY, Estelle, F-69120 Vaulx en Velin (FR)
(74) Mandataire: Ter Meer Steinmeister & Partner
(86) Numéro de dépôt international: PCT/FR2014/052626
(87) Numéro de publication internationale: WO 2015/059386

(56) Documents cités:
- WO-A1-2009/122094
- WO-A1-2010/139889
- WO-A1-2013/093351
- US-A1- 2004 070 551
- US-A1- 2005 184 655

## Description

La présente invention se rapporte au domaine des systèmes de visualisation utilisant des supports transparents en verre inorganique ou en matière plastique rigide, notamment les pare-brises automobile ou les vitrages pour bâtiment, en particulier les vitrines.

Tout particulièrement, même si elle n'y est pas limitée, la présente invention se rapporte au domaine des systèmes de visualisation dits tête haute, appelés HUD ou Head Up Display dans la technique. De tels systèmes sont utiles notamment dans les cockpits d'avion, les trains mais également aujourd'hui dans les véhicules automobiles des particuliers (voitures, camions, etc.). Ces systèmes permettent notamment d'informer le conducteur du véhicule sans que celui-ci éloigne son regard du champ de vision en avant du véhicule, ce qui permet d'accroître grandement la sécurité.

Dans de tels systèmes, le vitrage est en général constitué d'une structure en sandwich, comprenant le plus simplement deux feuilles de matière rigide telles que des feuilles de verre. Les feuilles de matière rigide sont reliées entre elles par un feuillet intercalaire thermoplastique comprenant ou constitué par le plus souvent du polyvinylbutyral (PVB). Sans sortir du cadre de l'invention, notamment dans le domaine de l'aviation ou de vitrage dits de sécurité à propriétés antibalistique, le vitrage peut également être constitué à partir de feuilles de matière plastique rigide transparentes, par exemple en polycarbonate ou en PMMA, ou d'un assemblage d'une feuille de verre et d'une telle feuille de matière plastique rigide. Egalement, le vitrage selon l'invention peut comprendre une feuille de verre ou de matière plastique rigide transparente, notamment du type précité, et d'une feuille de matière plastique souple collée sur ladite feuille rigide. Par rigide, on entend que les caractéristiques mécaniques du substrat, sont adaptées à une utilisation du support en tant que vitrage bâtiment, pare-brise etc...

De la manière la plus classique, la visualisation d'informations dans la voiture s'obtient en projetant une image sur un pare-brise ayant une structure feuilletée, c'est à dire formé de deux feuilles de verre et d'un intercalaire en matière thermoplastique. Cependant le conducteur observe alors une image double: une première image réfléchie par la surface du pare-brise orientée vers l'intérieur de l'habitacle et une seconde image par réflexion de la surface extérieure du pare-brise, ces deux images étant légèrement décalées l'une par rapport à l'autre. Ce décalage peut perturber la vision de l'information. Pour pallier ce problème, on peut citer la solution proposée dans le brevet US 5,013,134, dans lequel est décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour supprimer l'image double, on réalise classiquement un vitrage feuilleté en forme de coin en utilisant une feuille intercalaire dont l'épaisseur décroît du bord supérieur du vitrage au bord inférieur. Cependant, il est nécessaire que le profil du PVB soit très régulier et ne présente pas de variations d'épaisseur, car ceux-ci se transmettent au cours de l'assemblage sur le pare-brise et conduisent à des variations locales d'angle.

Alternativement, il est proposé dans le brevet US 6,979,499 B2 d'envoyer un faisceau incident, de longueur d'onde appropriée, sur des luminophores directement intégrés dans le vitrage, susceptibles de répondre à l'excitation par l'émission d'une radiation lumineuse dans le domaine de la lumière visible. De cette façon, une image réelle et non plus virtuelle, est formée directement sur le pare-brise. Cette image est en outre visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel une couche de luminophores additionnelle est incorporée. Les luminophores sont choisis en fonction de la longueur d'onde du rayonnement d'excitation incident. Cette longueur d'onde se situe le plus souvent dans le domaine de l'UV-visible, en particulier entre 350 et 410 nm, plus rarement dans le domaine de l'IR. Les luminophores, sous cette radiation incidente, réémettent un rayonnement dans le domaine du visible. On parle de down conversion lorsque le rayonnement incident est l'UV, et d'up conversion lorsque le rayonnement incident est l'IR. Une telle construction permet selon ce document de restituer directement sur le pare-brise ou le vitrage une image de n'importe quel objet. Selon cette divulgation, des matériaux luminophores sont déposés sur au moins une portion de la surface d'un des feuillets constituant le vitrage feuilleté (PVB ou verre), sous la forme d'une couche continue comprenant éventuellement plusieurs types de luminophores. L'image recherchée est obtenue par l'excitation sélective d'une aire déterminée de la couche de luminophores. La localisation de l'image et sa forme sont obtenues au moyen d'une source d'excitation pilotée et modulée par des moyens extérieurs.

Les expériences menées par le demandeur ont montré que de tels dispositifs HUD, incorporant des luminophores dans le vitrage assemblé, se caractérisent par une luminance trop faible sous une source d'excitation UV conventionnellement non focalisée. Or, la concentration des luminophores est limitée par la valeur de flou et par la couleur du pare-brise, qui ne doivent pas être trop marquées pour ne pas gêner la vision du conducteur.

En particulier, il apparaît que l'intensité lumineuse obtenue avec de tels dispositifs reste encore très insuffisante lorsque la luminosité extérieure est forte, et d'une manière générale en vision diurne, puisqu'elle ne dépasse pas quelques dizaines de candelas. Typiquement, on a mesuré sur un système du type «HUD » classique, c'est-à-dire fonctionnant selon les principes de la réflexion, qu'un rayonnement monochromatique était visible d'un observateur, par exemple au niveau de la zone de vision du conducteur d'un véhicule, si la luminance était de l'ordre de plusieurs centaines de cd/m², notamment notablement supérieure à 500 cd/m², voire 1000 cd/m², dans des conditions normales d'éclairage extérieur diurne du pare-brise.

Pour obtenir une telle luminance, il est possible d'utiliser des sources excitatrices générant une lumière concentrée et dirigée, délivrée par des sources plus spécifiques du type diode.

Un autre problème primordial lié à l'utilisation des sources concentrées de lumière telles que des diodes (éventuellement laser) tient au choix du luminophore utilisé : celui-ci doit présenter un rendement de conversion du rayonnement incident élevé mais ne doit pas se dégrader sous le rayonnement UV extérieur ni sous le rayonnement d'excitation incident notamment lorsque celui-ci est du type laser, afin d'assurer à la fonction de visualisation une durée de vie convenable.

Dans un tel vitrage permettant la visualisation d'informations directement à sa surface, le choix du luminophore apparaît ainsi primordial et est nécessairement un compromis entre différentes caractéristiques et propriétés liées à une telle utilisation, parmi lesquelles les plus importantes sont:
- une forte luminance assurée par un bon rendement quantique sous le rayonnement d'excitation incident,
- une durabilité maximale vis-à-vis des rayonnements UV solaires incidents, telle que notamment mesurée par le test Arizona-WOM® dans le domaine,
- une transparence telle que le flou (« haze ») ne soit pas supérieur à 2% et la transmission lumineuse soit supérieure à 70%, telle que mesurée selon la norme ISO 9050 (2003),
- une compatibilité chimique avec le feuillet thermoplastique composant du vitrage,
- une coloration relativement neutre, notamment lorsqu'il est présent en forte concentration dans le vitrage, telle que par exemple mesurée par le test dit « Yellowness Index » selon la norme DIN 6167,
- une durabilité satisfaisante vis-à-vis du rayonnement d'excitation incident.

Pour résoudre l'ensemble des problèmes précédemment exposés, La demande WO2010/139889 décrit déjà l'utilisation d'un matériau luminophore du type hydroxy-téréphtalate, présentant une forte luminance, assurée par un bon rendement quantique sous une excitation UV incidente et une bonne durabilité aux tests de vieillissement sous excitation UV.

Si les composés décrits dans cette demande présentent de très bonnes propriétés générales, leur luminescence est toujours centrée sur une longueur d'onde d'émission proche de 440 nm, c'est-à-dire une émission de couleur bleue.

Dans le cadre de la visualisation d'informations sur un pare-brise ou sur une vitrine, il s'avère toutefois nécessaire d'obtenir de nouveaux composés dont la longueur d'onde d'émission est cette fois centrée sur d'autres couleurs du spectre visible, en particulier proches de l'orange, pour permettre une visualisation polychromatique des informations projetées sur le pare-brise.

Bien entendu, il est nécessaire de conserver ou au moins de ne pas dégrader de façon inacceptable toutes les autres propriétés telles que décrites précédemment, en particulier le rendement quantique sous une excitation UV incidente, la durabilité aux tests de vieillissement sous excitation UV, et la coloration sous éclairage ambiant.

Or, le décalage de Stokes (différence entre les maxima des spectres d'excitation et d'émission) étant habituellement faible pour les composés organiques, une émission de couleur orange (c'est-à-dire avec un maximum d'émission au-delà de 550 nm) devrait normalement impliquer une absorption très marquée dans le domaine du visible (typiquement pouvant aller jusqu'à au moins 500 nm). Une telle absorption d'une partie du spectre lumineux se traduit par une coloration orange très marquée du luminophore, très préjudiciable à une utilisation dans un vitrage utilisé pour la visualisation d'informations.

Le but de la présente invention est ainsi de proposer des vitrages incorporant des luminophores dont le maximum d'émission est centré sur une longueur d'onde comprise entre 550 et 650 nm, donnant une couleur d'émission jaune-orange-rouge, mais absorbant faiblement la lumière visible, en particulier le rayonnement compris entre 440 et 550 nm, de telle façon que la couleur du vitrage apparaisse relativement neutre, même sous forte insolation.

La présente invention porte sur des vitrages comprenant des composés luminophores présentant donc une luminescence centrée sur une longueur d'onde très supérieure à celle des composés décrits dans la demande WO2010/139889, les deux pouvant notamment être associés dans un vitrage pour assurer la polychromie de l'image visionnée sur celui-ci .

Plus précisément, la présente invention se rapporte à un vitrage pour la visualisation d'informations, en particulier à un pare-brise pour automobile ou vitrage pour bâtiment, comprenant un assemblage d'au moins deux feuilles transparentes de verre inorganique ou d'une matière plastique rigide, reliées entre elles par un intercalaire d'une matière thermoplastique ou adhésive ou par des feuillets multicouches incorporant un tel intercalaire, au moins un matériau luminophore étant intégré dans ledit vitrage pour permettre ladite visualisation. Selon l'invention, un desdits luminophores comprend un noyau benzénique substitué au moins par :
- deux groupements hydroxyles OH,
- un groupement carboné R, ledit groupement R comprenant un hétérocycle de préférence insaturé, en particulier aromatique,
- un groupement carboné R' de formule -COOR", dans lequel R" est un groupement hydrocarboné ou l'hydrogène.

Selon l'invention, au moins un desdits luminophore est intégré dans ledit intercalaire ou encore disposé entre celui-ci et l'une des feuilles transparentes ou encore intégré dans une éventuelle feuille transparente de matière plastique.

De préférence le luminophore est intégré dans l'intercalaire, notamment lorsque celui-ci est en PVB.

Selon certains modes avantageux mais non limitatifs de la présente invention, qui peuvent le cas échéant être combinés entre eux :
- Les électrons du cycle insaturé entrent en résonance avec les électrons du noyau benzénique.
- Le matériau luminophore comprend deux groupements hydroxyles en position para l'un par rapport à l'autre et deux groupements R et R' en position para l'un par rapport à l'autre.
- Ledit hétérocycle insaturé comprend au moins un atome d'azote.
- R' est un groupement ester -COOR", dans lequel R" est une chaîne hydrocarbonée comprenant de 1 à 15 atomes de carbone, bornes incluses.
- R" est un chaîne hydrocarbonée comprenant une chaîne carbonée principale comprenant plus de 5 atomes de carbone liés successivement.
- R" est un groupement carboné linéaire ou ramifié comprenant une chaîne carbonée principale comprenant plus de 5 atomes de carbone consécutifs, ledit groupement R" comprenant, si ladite chaîne est linéaire, plus de 10 atomes de carbone au total et, si ladite chaîne est ramifiée, au moins 7 atomes de carbone au total.
- le groupement R comprend un hétérocycle insaturé et un noyau benzénique.
- ledit groupement R comprend un groupe oxazole et de préférence comprend ou est constitué d'un groupe benzoxazole : 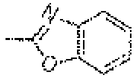
- ledit groupement R comprend un groupe imidazole et de préférence comprend ou est constitué d'un groupe benzimidazole : 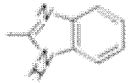
- l'intercalaire est en matière thermoplastique et ledit luminophore est dispersé dans ladite matière thermoplastique.
- la matière thermoplastique constituant ledit intercalaire est choisie dans le groupe des PVB, des PVC plastifiés, du polyuréthane PU ou des éthylène vinyle acétate EVA.
- Ledit vitrage est un pare-brise automobile ou d'avion, comprenant un assemblage de deux feuilles transparentes, constituées de verre inorganique ou de matière plastique telle que du PMMA ou du polycarbonate reliées entre elles par un intercalaire d'une matière thermoplastique ou adhésive.
- Ledit vitrage est un vitrage pour bâtiment, notamment une vitrine, une allège ou une paroi ou cloison de séparation.

Selon un premier aspect, le vitrage selon l'invention est un pare-brise pour automobile. Un tel vitrage feuilleté est alors habituellement constitué par un ensemble de deux feuilles rigides en verre inorganique relié par un intercalaire fait dans une matière thermoplastique. Par exemple la matière thermoplastique constituant ledit intercalaire est choisie dans le groupe des PVB, des PVC plastifiés, du polyuréthane PU ou des éthylènes vinyle acétate EVA.

De préférence, la matière thermoplastique est le PVB.

Selon un mode de réalisation possible, les feuilles transparentes sont reliées entre elles par un feuillet multicouche intégrant une succession de couches PVB/PET/PVB, dans lequel PET est le polyéthylène téréphtalate.

Un vitrage feuilleté selon l'invention peut notamment être obtenu par un procédé dans lequel on dépose la couche mince de luminophores sur un des verres du vitrage ou sur l'intercalaire tel que le feuillet thermoplastique du type PVB par une technique choisie parmi les techniques de sérigraphie, de spray, de rouleau, d'enduction, de jet d'encre ou encore les techniques du type offset, flexogravure ou encore héliogravure, sous la forme d'une solution contenant un solvant et éventuellement un liant polymère, puis on effectue le feuilletage du vitrage sous autoclave. Les luminophores peuvent également être introduits lors de la fabrication par extrusion du feuillet thermoplastique, généralement directement sous forme de poudre.

Typiquement dans un tel pare-brise selon l'invention, après cette étape de feuilletage, le luminophore selon l'invention est dispersé dans ladite matière thermoplastique.

Selon un autre aspect, le vitrage selon l'invention est un pare-brise pour aviation tel que décrit par exemple dans les publications EP0893340B1 ou WO2007/003849.

Selon un troisième aspect, le vitrage selon l'invention est un vitrage pour bâtiment, notamment une vitrine, une allège ou une paroi ou cloison de séparation permettant la visualisation d'informations au travers de celle-ci.

Sans sortir du cadre de l'invention et selon un quatrième aspect, le vitrage peut également être constitué d'une feuille de verre sur laquelle est collée, au moyen d'un intercalaire d'une matière adhésive par exemple une colle acrylique, une feuille de plastique souple, par exemple en polyester.

L'invention se rapporte enfin à un dispositif de visualisation d'une image sur un vitrage transparent, comprenant un vitrage selon l'une des réalisations précédentes et une source génératrice de rayonnement d'excitation concentré du type diode éventuellement laser dont le rayonnement est compris entre 350 et 410 nm, le rayonnement d'excitation étant dirigé vers la ou les zones du vitrage comprenant la couche de luminophore.

Dans le dispositif de visualisation, la source génératrice de rayonnement UV-visible comprend typiquement au moins une diode laser émettant un rayonnement d'excitation UV-visible dont la longueur d'onde est inférieure à 410 nm et de préférence est de l'ordre de 405 nm.

De préférence, le dispositif de visualisation comprend en outre des moyens de modulation de la puissance de la source génératrice de rayonnement UV-visible, notamment afin d'adapter la luminance aux conditions d'éclairage extérieur du vitrage, par exemple en fonction des conditions d'ensoleillement du vitrage.

Par exemple les moyens de modulation peuvent définir au moins une puissance convenant pour une utilisation de jour et au moins une puissance inférieure à la précédente et convenant pour une utilisation de nuit.

L'invention et ses avantages seront mieux compris à la lecture du mode de réalisation de l'invention qui suit, en relation avec la figure unique jointe.

La figure jointe permet d'illustrer l'invention et ses avantages.

Sur cette figure, on a schématisé un pare-brise et un dispositif selon l'invention :
Le pare-brise 1 se compose de deux feuilles 2 et 9 typiquement en verre mais qui pourraient également être constituées de supports ou feuilles de matière plastique rigide et résistante, par exemple du polycarbonate. Entre les deux feuilles, est présent un feuillet intercalaire thermoplastique 3 tel que du PVB (polyvinylbutyral), du PVC plastifié, PU ou EVA ou bien encore un feuillet thermoplastique multicouche incorporant par exemple du PET (polyéthylène téréphtalate), dont la succession des couches est par exemple PVB/PET/PVB.

Des particules de luminophore organique selon l'invention sont insérées au niveau du feuillet thermoplastique intercalaire 3 avant l'assemblage des différents feuillets, soit directement lors de l'extrusion de la feuille thermoplastique, soit grâce à un dépôt par une des techniques citées ci-après. Le dépôt est réalisé sur au moins une partie de la face interne de la feuille interne du vitrage ou sur au moins une partie de la face interne du feuillet thermoplastique.

De préférence, les particules de luminophore avant feuilletage présentent une répartition de taille majoritairement comprise entre 1 et 100 microns. Par majoritairement il est entendu que plus de 90% des particules composant la poudre commerciale ont un diamètre compris entre 1 et 100 microns.

Une source 4 émettant un rayonnement lumineux d'excitation est utilisée pour envoyer un rayonnement concentré incident 7 de longueur d'onde proche de 400 nm. Le luminophore 10, présent sous forme moléculaire dans le feuillet thermoplastique intercalaire 3 après feuilletage, présente un fort coefficient d'absorption du rayonnement incident. Il réémet donc un rayonnement intense dans le domaine visible.

Le rayonnement visible émis par le luminophore est alors directement observable par l'œil 5 du conducteur, qui visualise ainsi l'objet sur le pare-brise sans avoir à quitter la route des yeux. De cette façon, une image peut être directement matérialisée sur un pare-brise feuilleté sans nécessiter d'adapter la structure de celui-ci, par exemple l'épaisseur du feuillet intercalaire, ce qui permet une fabrication économique des systèmes HUD.

La source utilisée pour générer le rayonnement concentré est par exemple une source UV-visible du type diode, éventuellement laser.

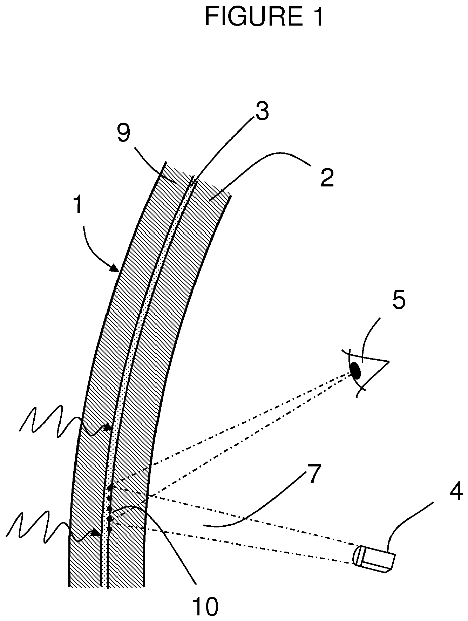

Selon un mode possible de réalisation, il est possible d'utiliser un projecteur DLP pour moduler l'onde excitatrice selon le mode décrit dans la demande US 2005/231652, paragraphe [0021]. Il est également possible selon l'invention d'utiliser comme source d'excitation UV-visible un dispositif tel que décrit dans la demande US2004/0232826, notamment tel que décrit en connexion avec la figure 3.

Comme indiqué précédemment, le luminophore peut être inséré dans le feuillet PVB lors de l'extrusion de celui-ci, ou bien il peut être déposé sur le verre ou le feuillet PVB par exemple par des techniques de sérigraphie, de spray, de rouleau, d'enduction, de jet d'encre ou encore par des techniques du type offset, flexogravure ou héliogravure.

De préférence, le dépôt par l'une des techniques précédentes est effectué après dissolution ou dispersion des particules de luminophores dans un solvant s'évaporant rapidement, et qui peut également contenir sous forme dissoute de la matière constitutive du feuillet thermoplastique, du PVB par exemple, pour faciliter l'incorporation du luminophore dans le feuillet thermoplastique lorsque celui-ci est lui-même en PVB.

Il a été trouvé par le demandeur que dans le cadre d'une application de visualisation d'une image au travers d'un vitrage transparent, l'utilisation de luminophores selon l'invention permet de répondre efficacement aux impératifs suivants, nécessaires à une telle application :
a) une netteté de l'image acceptable,
b) une intensité de luminescence suffisante pour qu'elle soit observable par le conducteur,
c) une transmission lumineuse supérieure à 70%.
Le mode de réalisation qui précède n'est bien évidemment en aucune façon limitatif de la présente invention, sous aucun des aspects précédemment décrits.

### Exemples :

Les exemples qui suivent permettent d'illustrer un exemple de réalisation d'un pare-brise feuilleté selon la présente invention et ses avantages par rapport à l'art antérieur.

Dans les exemples, on synthétise différents vitrages feuilletés comparatifs et selon la présente invention. Tous les vitrages comprennent la succession de deux feuilles de verre reliées par un feuillet intercalaire de PVB d'épaisseur 760 microns. L'assemblage est réalisé selon les techniques bien connues de l'art.

Préalablement au feuilletage, selon un carré de dimension environ 10×10 cm², une couche de luminophores, dont la formule développée est donnée ci-après, est déposée par une technique de pulvérisation classique sur la feuille de verre intérieure 2 et sur sa face tournée vers le feuillet PVB, avant l'étape d'assemblage (voir figure).

Plus précisément, on réalise au préalable une dilution du luminophore dans un solvant de type éthanol ou tétrahydrofurane (THF). La dilution est réalisée proche du maximum de solubilité du luminophore dans le solvant pour minimiser le volume de solution.

Le mélange est ensuite déposé par pulvérisation (spray) selon les techniques classiques sur la feuille de verre, de manière à obtenir, après séchage du solvant, un poids de matière sèche de l'ordre de 5 g par m² de verre.

On laisse ensuite le solvant s'évaporer, puis le feuilletage est réalisé avec les deux feuilles de verre et le feuillet PVB selon les techniques en autoclave classiques dans le domaine. On obtient ainsi un pare-brise tel que décrit sur la figure.

Sur les différents vitrages obtenus, on a mesuré les paramètres décrits précédemment selon les protocoles suivants :
La résistance à la chaleur du vitrage a été réalisée conformément au test décrit dans la norme européenne ECE R43 A3/5.

Les intensités de luminescence absolues ont été mesurées par un spectromètre UV-visible et comparés entre elles en divisant l'intensité maximale de luminescence par la concentration moléculaire en luminophores, pour l'ensemble des molécules testées. Une intensité de référence 100 est attribuée au composé de référence selon l'exemple 1.

Les émissions se situent dans des domaines de longueurs d'onde dans lesquels la sensibilité de l'œil humain varie grandement avec la longueur d'onde (avec notamment une sensibilité plus forte dans le vert-jaune). Les luminances relatives, tenant compte de l'efficacité lumineuse de l'œil humain en fonction de la longueur d'onde d'émission, sont également calculées sur la base des données précédentes, pour l'ensemble des molécules testées, pour une même concentration moléculaire.

La durabilité aux rayonnements UV solaires incidents a été mesurée par le test WOM Arizona ® qui consiste à exposer le vitrage à une radiation émise par une lampe à arc au Xénon pour simuler le rayonnement solaire selon la norme ISO 4892 (partie 2) à une température de 90°C. Une telle exposition permet un vieillissement accéléré du luminophore d'un facteur 10 environ. La mesure de la luminance au bout de 3000 heures d'exposition (correspondant donc sensiblement à 3 ans d'utilisation en condition réelles), rapportée à la luminance initiale, permet d'estimer et de comparer directement et simplement les propriétés de durabilité des différents luminophores sous rayonnement UV.

La durabilité sous le rayonnement d'excitation a été mesurée selon la méthode suivante :
On a dirigé une diode de puissance de longueur d'onde d'émission égale à 405 nm directement sur la partie du vitrage comprenant la couche de luminophore, sur une surface d'environ 1 mm². Un luminance-mètre est dirigée vers le spot de lumière émis et on mesure en continu la luminance en cd/m².

On mesure ensuite au bout de 500h la luminance relative de la partie irradiée, sur la base de la luminance initiale, cette valeur caractérisant selon l'invention la durabilité du luminophore sous le rayonnement concentré incident. L'éclairement en continu par un spot immobile de grande puissance peut conduire à une dégradation rapide du luminophore et donc à une diminution rapide de sa luminance. Une luminance relative de 1 indique en particulier que le luminophore est parfaitement stable sous le rayonnement UV incident.

Les valeurs mesurées pour ces différents paramètres sont reportées dans le tableau 1 ci-dessous.

Les différentes molécules testées répondent aux formulations décrites par la suite.

Le composé comparatif selon l'exemple 1 est le produit commercial diéthyl 2,5 dihydroxytéréphtalate répertorié sous le numéro CAS 5870-38-2. Il a été décrit dans la demande WO2010/139889.

Les autres molécules sont obtenues grâce aux procédés de synthèse suivants :
- Pour la molécule selon l'exemple 2 : du diéthyle 2,5-dihydroxytéréphtalate et de la potasse sont mis à reflux dans l'éthanol. Le produit obtenu est traité en présence de SOCl₂, puis réagit avec l'aminophénol en présence d'acide méthane sulfonique pour l'obtention du composé décrit ci-après. La structure du composé a été vérifiée par les techniques habituelles dans le domaine (RMN, spectroscopie de masse, etc.).
- Pour la molécule selon l'exemple 3 : de l'acide 2,5 di-hydroxytéréphtalique est condensé avec de l'aminophénol en présence d'acide polyphosphorique. Le produit obtenu subit une réaction d'estérification avec le 1-dodécanol en présence d'APTS (acide paratoluènesulfonique) dans le toluène, pour l'obtention du composé décrit ci-après.
- Pour la molécule selon l'exemple 4 : un mélange de diéthyl 2,5-dihydroxytéréphtalate et de potasse sont mis à reflux dans l'éthanol. Le produit obtenu est traité en présence de SOCl₂, puis réagit avec le diaminobenzène en présence d'acide méthanesulfonique pour l'obtention du composé selon l'exemple 4 décrit ci-après.

Les molécules synthétisées sont :
- Exemple 1 (selon WO2010/139889): 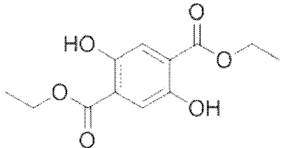
- Exemple 2 (selon l'invention) : 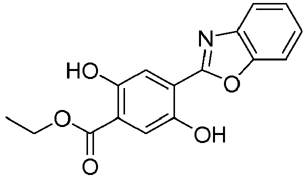
- Exemple 3 (selon l'invention) : 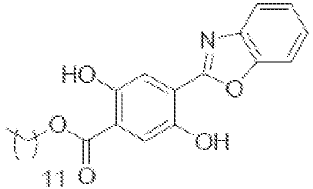
- Exemple 4 (selon l'invention) :

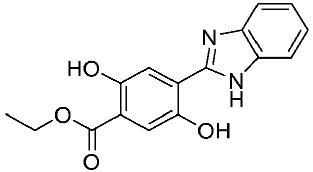

L'ensemble des résultats obtenus sont rassemblés dans le tableau 1 :

**Tableau 1**

| | Exemple 1 (référence) | Exemple 2 (invention) | Exemple 3 (invention) | Exemple 4 (invention) |
|---|---|---|---|---|
| Coloration du luminophore | Très faible coloration jaune | Légère coloration jaune | Légère coloration jaune | Très faible coloration jaune |
| Résistance à la chaleur (ECE R43 A3/5) | conforme | conforme | conforme | conforme |
| Transmission lumineuse | >70% | >70% | >70% | >70% |
| Durabilité sous rayonnement UV (en % de la luminance initiale après 3000 h) | 100 | 100 | 100 | 75 |
| λ (nm) correspondant au maximum d'émission sous excitation UV | 450 nm | 595 nm | 595 nm | 575 nm |
| Couleur perçue | Bleu | Orange | Orange | Jaune orangé |
| Intensité de luminescence absolue (molaire) à λₘₐₓ d' émission (λ_{exc} = 405 nm) | 100 | 20 | 35 | 35 |
| Luminance relative molaire sous excitation UV | 100 | 55 | 90 | 160 |

Les résultats reportés dans le tableau 1, par comparaison avec le luminophore de référence selon l'exemple 1, montrent que les propriétés de durabilité sous rayonnement UV (Arizona) sont satisfaisants pour tous les composés testés. Par ailleurs tous sont conformes aux tests de résistance à la chaleur.

La couleur d'émission de l'échantillon selon l'exemple 4 apparaît jaune orangé, avec un maximum d'émission centré sur 575 nm, tandis que la couleur d'émission des échantillons selon les exemples 2 et 3 est orange, avec un maximum d'émission centré sur 595 nm. L'intensité maximale de luminescence (absolue) des trois composés apparaît plus faible que celle du composé de référence, bien qu'encore élevée, notamment au regard du très fort décalage de Stokes entre les bandes d'absorption et les bandes d'émission des composés selon l'invention. Cette moindre performance par rapport au composé de référence est cependant compensée par la plus forte sensibilité de l'œil pour les couleurs jaune et orange. Ainsi, la luminance relative (c'est-à-dire tenant compte de la sensibilité de l'œil) des trois composés sous excitation UV se rapproche de la luminance du composé de référence, voire la dépasse.

En outre, de façon surprenante, on constate que la luminance du luminophore selon l'exemple 2 peut encore être augmentée avec l'allongement de la chaîne carbonée présente sur le groupement ester positionné sur le cycle benzénique. Au final, les luminophores selon l'invention apparaissent parfaitement complémentaires du composé de référence pour permettre la visualisation d'images en couleur sur un vitrage selon l'invention.

Dans la description qui précède, la présente invention a été décrite en relation avec l'utilisation du vitrage sous excitation laser. Il est bien évident que la présente invention n'est pas limitée à ce mode d'excitation et que d'autres sources de rayonnement, notamment des diodes électroluminescentes de puissance, peuvent être utilisés comme source du rayonnement d'excitation, par exemple pour la visualisation de pictogrammes pré-imprimés sur ledit vitrage, tel que décrit dans les demandes WO2009/122094 ou FR2929017.

Egalement, l'invention concerne tout vitrage comprenant un luminophore selon l'invention éventuellement en mélange avec d'autres luminophores émettant selon d'autres couleurs du spectre visible, notamment pour l'obtention d'une image polychrome.

## Revendications

1. Vitrage pour la visualisation d'informations comprenant un assemblage d'au moins deux feuilles transparentes de verre inorganique ou d'une matière plastique rigide, reliées entre elles par un intercalaire d'une matière thermoplastique ou adhésive ou par des feuillets multicouches incorporant un tel intercalaire, au moins un matériau luminophore étant intégré dans ledit vitrage pour permettre ladite visualisation, dans lequel un desdits luminophores comprend un noyau benzénique substitué au moins par :
- deux groupements hydroxyles OH,
- un groupement carboné R, ledit groupement R comprenant un hétérocycle,
- un groupement carboné R' de formule -COOR", dans lequel R" est un groupement hydrocarboné ou l'hydrogène.

2. Vitrage selon la revendication 1, dans lequel ledit hétérocycle est insaturé et de préférence dans lequel ledit hétérocycle est aromatique.

3. Vitrage selon la revendication 2, dans lequel les électrons du cycle insaturé ou aromatique entrent en résonance avec les électrons du noyau benzénique.

4. Vitrage selon l'une des revendications précédentes comprenant un matériau luminophore dans lequel les deux groupements hydroxyles sont en position para l'un par rapport à l'autre et dans lequel les groupements R et R' sont en position para l'un par rapport à l'autre.

5. Vitrage selon l'une des revendications précédentes, dans lequel ledit hétérocycle comprend au moins un atome d'azote.

6. Vitrage selon l'une des revendications précédentes, dans lequel R' est un groupement ester -COOR", dans lequel R" est une chaîne hydrocarbonée comprenant de 1 à 15 atomes de carbone, bornes incluses.

7. Vitrage selon l'une des revendications précédentes, dans lequel R" est un chaîne hydrocarbonée comprenant une chaîne carbonée principale comprenant plus de 5 atomes de carbone liés successivement.

8. Vitrage selon l'une des revendications précédentes, dans lequel R" est un groupement carboné linéaire ou ramifié comprenant une chaîne carbonée principale comprenant plus de 5 atomes de carbone consécutifs, ledit groupement R" comprenant, si ladite chaîne est linéaire, plus de 10 atomes de carbone au total et, si ladite chaîne est ramifiée, au moins 7 atomes de carbone au total.

9. Vitrage selon l'une des revendications précédentes, dans lequel ledit groupement R comprend un hétérocycle insaturé et un noyau benzénique.

10. Vitrage selon l'une des revendications précédentes, dans lequel ledit groupement R comprend un groupe benzoxazole :

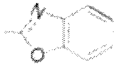

11. Vitrage selon l'une des revendications 1 à 9, dans lequel ledit groupement R comprend un groupe benzimidazole :

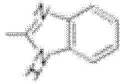

12. Vitrage selon l'une des revendications précédentes, dans lequel l'intercalaire est en matière thermoplastique et dans lequel ledit luminophore est dispersé dans ladite matière thermoplastique.

13. Vitrage selon l'une des revendications précédentes, dans lequel la matière thermoplastique constituant ledit intercalaire est choisie dans le groupe des PVB, des PVC plastifiés, du polyuréthane PU ou des éthylène vinyle acétate EVA.

14. Pare-brise automobile ou d'aviation constitué d'un vitrage selon l'une des revendications précédentes, comprenant un assemblage de deux feuilles transparentes, constituées de verre inorganique ou de matière plastique telle que du PMMA ou du polycarbonate reliées entre elles par un intercalaire d'une matière thermoplastique ou adhésive.

15. Vitrage pour bâtiment, notamment une vitrine, une allège ou une paroi ou cloison de séparation, selon l'une des revendications 1 à 13.

16. Dispositif de visualisation d'une image sur un vitrage transparent, comprenant un vitrage selon l'une des revendications 1 à 13 et une source génératrice de rayonnement d'excitation concentré du type diode éventuellement laser dont le rayonnement est compris entre 350 et 410 nm, le rayonnement d'excitation étant dirigé vers la ou les zones du vitrage comprenant la couche de luminophore.

## Patentansprüche

1. Verglasung zur Anzeige von Informationen, umfassend eine Anordnung von mindestens zwei transparenten Scheiben aus anorganischem Glas oder einem starren Kunststoffmaterial, die durch einen Abstandhalter aus einem thermoplastischen oder haftenden Material oder durch mehrschichtige Lagen verbunden sind, die einen derartigen Abstandhalter einschließen, wobei mindestens ein Leuchtstoffmaterial in die Verglasung integriert ist, um die Anzeige zu ermöglichen, wobei einer der Leuchtstoffe einen Benzolkern umfasst, substituiert mindestens durch:
- zwei OH-Hydroxylgruppen,
- eine kohlenstoffhaltige Gruppe R, wobei die Gruppe R einen Heterozyklus umfasst,
- eine kohlenstoffhaltige Gruppe R' der Formel -COOR", wobei R" eine Kohlenwasserstoffgruppe oder Wasserstoff ist.

2. Verglasung nach Anspruch 1, wobei der Heterozyklus ungesättigt ist und vorzugsweise aromatisch ist.

3. Verglasung nach Anspruch 2, wobei die Elektronen des ungesättigten oder aromatischen Zyklus mit den Elektronen des Benzolkerns in Resonanz treten.

4. Verglasung nach einem der vorhergehenden Ansprüche, umfassend ein Leuchtstoffmaterial, in welchem die beiden Hydroxylgruppen zueinander in para-Position und die R- und R'-Gruppen zueinander in para-Position stehen.

5. Verglasung nach einem der vorhergehenden Ansprüche, wobei der Heterozyklus mindestens ein Stickstoffatom umfasst.

6. Verglasung nach einem der vorhergehenden Ansprüche, wobei R' eine Estergruppe -COOR" ist, in welcher R" eine Kohlenwasserstoffkette mit 1 bis 15 Kohlenstoffatomen ist, Grenzwerte eingeschlossen.

7. Verglasung nach einem der vorhergehenden Ansprüche, wobei R" eine Kohlenwasserstoffkette ist, die eine Hauptkohlenstoffkette mit mehr als fünf aufeinanderfolgend gebundenen Kohlenstoffatomen umfasst.

8. Verglasung nach einem der vorhergehenden Ansprüche, wobei R" eine lineare oder verzweigte kohlenstoffhaltige Gruppe ist, die eine Hauptkohlenstoffkette mit mehr als fünf aufeinanderfolgenden Kohlenstoffatomen umfasst, wobei die Gruppe R", wenn die Kette linear ist, insgesamt mehr als zehn Kohlenstoffatome und wenn die Kette verzweigt ist, insgesamt mindestens sieben Kohlenstoffatome umfasst.

9. Verglasung nach einem der vorhergehenden Ansprüche, wobei die Gruppe R einen ungesättigten Heterozyklus und einen Benzolkern umfasst.

10. Verglasung nach einem der vorhergehenden Ansprüche, wobei die Gruppe R eine Benzoxazol-Gruppe umfasst:

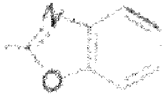

11. Verglasung nach einem der Ansprüche 1 bis 9, wobei die Gruppe R eine Benzimidazol-Gruppe umfasst:

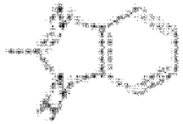

12. Verglasung nach einem der vorhergehenden Ansprüche, wobei die Zwischenschicht aus thermoplastischem Material ist und wobei der Leuchtstoff in dem thermoplastischen Material dispergiert ist.

13. Verglasung nach einem der vorhergehenden Ansprüche, wobei das den Abstandhalter bildende thermoplastische Material aus der Gruppe der PVB, der plastifizierten PVC, Polyurethan PU oder Ethylenvinylacetat-EVA ausgewählt ist.

14. Windschutzscheibe für Kraftfahrzeuge oder Flugzeuge, bestehend aus einer Verglasung nach einem der vorhergehenden Ansprüche, umfassend eine Anordnung von zwei transparenten Scheiben, die aus anorganischem Glas oder Kunststoffmaterial wie PMMA oder Polycarbonat bestehen und durch einen Abstandhalter aus einem thermoplastischen oder haftenden Material miteinander verbunden sind.

15. Verglasung für Gebäude, insbesondere ein Schaufenster, eine Brüstung oder eine Wand oder Trennwand nach einem der Ansprüche 1 bis 13.

16. Vorrichtung zur Anzeige eines Bildes auf einer transparenten Verglasung, umfassend eine Verglasung nach einem der Ansprüche 1 bis 13 und eine Quelle zum Erzeugen einer konzentrierten Anregungsstrahlung vom Typ Diode, gegebenenfalls Laser, deren Strahlung zwischen 350 und 410 nm liegt, wobei die Anregungsstrahlung auf die Zone(n) der Verglasung gerichtet ist, welche die Leuchtstoffschicht umfasst.

## Claims

1. Glazing for displaying information, comprising an assembly of at least two transparent sheets which are made of inorganic glass or a rigid plastics material and are interconnected by an intermediate layer made of a thermoplastic or adhesive material or by multilayer sheets incorporating such an intermediate layer, at least one phosphor material being integrated into said glazing to allow said display, wherein one of said phosphors comprises a benzene nucleus substituted at least by:
- two OH hydroxyl groups,
- a carbon group R, said group R comprising a heterocycle,
- a carbon group R' of formula -COOR", where R" is a hydrocarbon group or hydrogen.

2. Glazing according to claim 1, wherein said heterocycle is unsaturated, and preferably wherein said heterocycle is aromatic.

3. Glazing according to claim 2, wherein the electrons of the unsaturated or aromatic cycle resonate with the electrons of the benzene nucleus.

4. Glazing according to any of the preceding claims, comprising a phosphor material, wherein the two hydroxyl groups are in the para position relative to one another, and wherein the groups R and R' are in the para position relative to one another.

5. Glazing according to any of the preceding claims, wherein said heterocycle comprises at least one nitrogen atom.

6. Glazing according to any of the preceding claims, wherein R' is an ester -COOR" group, where R" is a hydrocarbon chain comprising from 1 to 15 carbon atoms, inclusive.

7. Glazing according to any of the preceding claims, wherein R" is a hydrocarbon chain comprising a main carbon chain comprising more than 5 carbon atoms bonded successively.

8. Glazing according to any of the preceding claims, wherein R" is a linear or branched carbon group comprising a main carbon chain comprising more than 5 consecutive carbon atoms, said group R" comprising, if said chain is linear, more than 10 carbon atoms in total and, if said chain is branched, at least 7 carbon atoms in total.

9. Glazing according to any of the preceding claims, wherein said group R comprises an unsaturated heterocycle and a benzene nucleus.

10. Glazing according to any of the preceding claims, wherein said group R comprises a benzoxazole group:

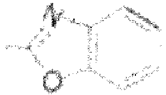

11. Glazing according to any of claims 1 to 9, wherein said group R comprises a benzimidazole group:

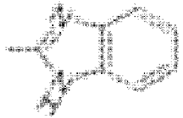

12. Glazing according to any of the preceding claims, wherein the intermediate layer is made of thermoplastic material, and wherein said phosphor is dispersed in said thermoplastic material.

13. Glazing according to any of the preceding claims, wherein the thermoplastic material constituting said intermediate layer is selected from the group of PVB, plasticized PVC, polyurethane PU or ethylene vinyl acetate EVA.

14. Automobile or aircraft windshield consisting of glazing according to any of the preceding claims, comprising an assembly of two transparent sheets which consist of inorganic glass or plastics material, such as PMMA or polycarbonate, and are interconnected by an intermediate layer made of a thermoplastic or adhesive material.

15. Glazing for a building, in particular a window, an apron wall or a partition wall, according to any of claims 1 to 13.

16. Device for displaying an image on transparent glazing, comprising glazing according to any of claims 1 to 13 and a source generating concentrated diode, optionally laser, excitation radiation, the radiation of which is between 350 and 410 nm, the excitation radiation being directed toward the region(s) of the glazing comprising the phosphor layer.
